# FASCICULE DE BREVET EUROPEEN

(11) **EP 4 027 019 B1**
(45) Date de publication et mention de la délivrance du brevet: **27.11.2024**
(21) Numéro de dépôt: 22150461.6
(22) Date de dépôt: 06.01.2022
(51) Int. Cl.: F04D 29/54, F01D 9/04, F02C 3/06, F02K 3/06

(54) **SOUS-ENSEMBLE DE TURBOMACHINE D'AÉRONEF**
UNTEREINHEIT EINES LUFTFAHRZEUG-TRIEBWERKS
SUBASSEMBLY FOR AN AIRCRAFT TURBINE ENGINE

(30) Priorité: 08.01.2021 BE 202105013
(43) Date de publication de la demande: 13.07.2022
(73) Titulaire: Safran Aero Boosters, 4041 Herstal (BE)
(72) Inventeur: PRINCIVALLE, Rémy Henri Pierre, Herstal (BE)
(74) Mandataire: Gevers Patents

(56) Documents cités:
- EP-A1- 3 369 893
- WO-A1-2019/086065
- SE-C2- 528 183

## Description

### Domaine technique

L'invention concerne un sous-ensemble de turbomachine d'aéronef.

### Art antérieur

Pour augmenter le rendement d'une turbomachine d'aéronef, une solution connue consiste à prévoir des compresseurs dont les parties rotoriques tournent à plus haute vitesse, et des soufflantes de grand diamètres, couplées à un compresseur par l'intermédiaire d'un réducteur. Ce dernier induit un encombrement en son voisinage car il doit être notamment supporté par la structure de la turbomachine d'aéronef, lubrifié, refroidi et alimenté en puissance. Pour ce faire, il est prévu un carter de support comprenant des bras structuraux traversant radialement une veine aérodynamique primaire de la turbomachine d'aéronef. Ces bras permettent une transmission d'efforts structurels ainsi qu'un passage de servitude. L'encombrement dû au réducteur induit un rayon intérieur minimal de la veine aérodynamique primaire à ce niveau. Celle-ci présente notamment un profil en col de cygne connue d'un homme du métier, par exemple des documents FR3027053A1 et FR3070440A1. Le document WO2019086065A1 divulgue une turbomachine selon l'art antérieur.

Généralement, les bras structuraux s'étendent de façon radiale et axiale de façon à impacter le moins possible l'écoulement du flux d'air dans la veine aérodynamique primaire. De telles turbomachines d'aéronef comprennent par exemple deux rangées d'aubes statoriques (fixes) axialement de part et d'autre de la rangée de bras structuraux. La rangée en amont de ces bras a pour objet de redresser le flux d'air sortant d'une soufflante en entrée de la veine aérodynamique primaire. La rangée en aval de ces bras, comme première rangée d'aubes d'entrée du compresseur, généralement appelée IGV (*Inlet Guide Vane,* en anglais), permet d'orienter le flux d'air primaire en amont de la première rangée d'aubes rotoriques du compresseur.

La succession d'une rangée d'aubes statoriques, d'une rangée de bras structuraux et de l'IGV, a un impact négatif sur l'encombrement axial, la masse et la complexité structurelle de la turbomachine d'aéronef, et en particulier elles peuvent être considérées comme trois rangées statoriques successives. Cette succession semble néanmoins indispensable au niveau amont d'un compresseur transsonique de turbomachine d'aéronef susmentionnée de façon à tenir compte des nombreuses contraintes techniques induites par une telle architecture. Ces contraintes technique comprennent entre autres des besoins structurels inhérents à la présence du réducteur tels que les bras structuraux et le rayon intérieur minimal susdit, des spécifications de débits du flux d'air primaire au sein du compresseur, des dimensions de la veine aérodynamique primaire ainsi que des vitesses du flux d'air primaire au niveau des parois intérieure et extérieure du compresseur suffisamment subsoniques sans toutefois excéder des vitesses critiques pour la stabilité et l'opérabilité du compresseur.

### Résumé de l'invention

Un objet de la présente invention est de fournir un sous-ensemble d'une turbomachine d'aéronef permettant de diminuer l'encombrement axial, la masse et la complexité structurelle de la turbomachine d'aéronef dans ce contexte technique, tout en tenant compte desdites contraintes techniques.

À cet effet, cette invention propose une turbomachine selon la revendication 1.

Le sous-ensemble selon la présente invention, par son intégration dans une turbomachine d'aéronef, permet de diminuer l'encombrement axial, la masse et la complexité structurelle de la turbomachine d'aéronef par la dispense d'une IGV, tout en préservant essentiellement son architecture (qui répond donc à certaines des contraintes techniques) et en intégrant lesdites contraintes techniques en terme de vitesses subsoniques au niveau des parois du compresseur.

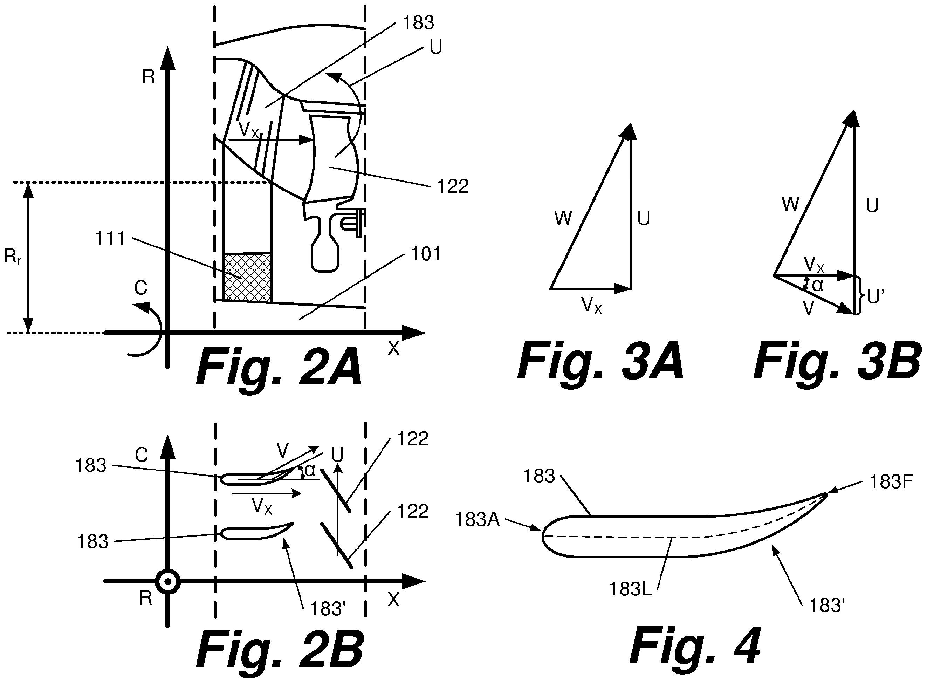

En effet, de façon plus précise, l'invention propose de se passer d'une IGV en entrée du compresseur, de sorte que la première rangée d'aubes en entrée du compresseur est directement ladite rangée d'aubes rotoriques. Comme cette suppression de l'IGV ne peut se faire de façon isolée sans tenir compte des contraintes techniques en terme de vitesses au niveau des parois du compresseur, il est proposé de façon avantageuse d'utiliser les bras structuraux du carter de support, ou du moins au moins un de ces bras, en modifiant leur profil de sorte qu'ils présentent une portion aval s'étendant à la fois axialement et circonférentiellement de sorte que sa direction d'extension au bord aval de fuite soit inclinée par rapport à l'axe moteur. Cette portion aval est donc déviante circonférentiellement pour le flux d'air primaire de telle sorte qu'elle induit une pré-rotation de ce dernier, juste en amont de la rangée d'aubes rotoriques du compresseur. Lorsque cette dernière est en rotation dans le sens circonférentiel de la pré-rotation, chacune des aubes rotoriques, dans son repère relatif, perçoit un flux d'air primaire d'une vitesse relative diminuée vu que la composante de cette vitesse due à la rotation de la rangée d'aubes rotoriques est partiellement compensée par cette pré-rotation. Cet effet technique est explicité plus mathématiquement notamment dans la description détaillée au regard des figures 3A et 3B ci-après introduites. De cette façon, il est possible de limiter les vitesses du flux d'air primaire perçues au niveau des parois intérieure et/ou extérieure du compresseur pour des rayons de veine aérodynamique primaire et des régimes correspondants imposés par l'architecture susdite de turbomachine d'aéronef, en garantissant la stabilité du compresseur.

Les termes « de façon successive et directe » (et leurs dérivés) correspondent à une succession le long de l'axe moteur, d'amont en aval, des rangées susmentionnées, sans autres rangée d'aubes et/ou de bras intercalée axialement entre elles. En particulier, le sous-ensemble selon l'invention ne comprend pas d'IGV en aval des bras structuraux, la rangée d'aubes d'entrée du compresseur étant précisément la rangée d'aubes rotoriques, agencée directement en aval de la rangée de bras. L'absence de cette IGV permet notamment d'obtenir un compresseur plus compact axialement et de simplifier structurellement ce dernier vu que les pièces mécaniques de l'IGV ne sont pas présentes.

Par le contexte technique susmentionné, l'invention est particulièrement adaptée pour une turbomachine d'aéronef comprenant un réducteur pour entraîner une soufflante de la turbomachine d'aéronef en rotation autour de l'axe moteur. Ce réducteur peut être compris dans le sous-ensemble. Les bras sont dans ce cas préférentiellement des bras structuraux d'un carter de support d'entrée de la turbomachine d'aéronef, et/ou ces bras s'étendent au moins partiellement de façon circonférentielle autour du réducteur. La rangée d'aubes statoriques est alors préférentiellement une rangée d'entrée de turbomachine d'aéronef, et la rangée d'aubes rotoriques est de préférence une rangée d'entrée d'un compresseur basse pression de la turbomachine d'aéronef. Dans ce cas, le rapport entre les rayons intérieur et extérieur de la rangée d'aubes rotoriques est préférentiellement compris entre 60 et 90%, les rayons intérieure et extérieur étant mesurés radialement à partir de l'axe moteur. L'invention est décrite en détails pour ces modes de réalisation ci-après, dans la section de description détaillée.

La présente invention n'est cependant aucunement limitée aux modes de réalisation préférés susmentionné. De façon plus générale, elle est particulièrement adaptée à toute architecture de compresseur agencée directement en aval d'un carter de support avec un profil en col de cygne, de préférence au sein d'une turbomachine avec un réducteur pour entraîner une soufflante. En particulier, le sous-ensemble selon l'invention comprend de préférence une portion annulaire de veine aérodynamique primaire de la turbomachine d'aéronef, pour accueillir le flux d'air primaire, présentant un profil en col de cygne, et telle que chacune des rangées susdites soit agencée dans cette portion annulaire. La turbomachine d'aéronef est de préférence un turboréacteur du type UHBR (*Ultra High By Pass Ratio*, en anglais) ou un propulseur du type « rotor ouvert » (désigné couramment par les termes « *open rotor* », « *propfan* » ou « *unducted fan* » en anglais). La turbomachine d'aéronef comprend de préférence une soufflante munie d'un système de calage variable.

Le compresseur auquel appartient la rangée d'aubes rotoriques n'est en particulier pas nécessairement un compresseur basse pression. Il peut tout aussi bien être un compresseur pression intermédiaire (pour une turbomachine d'aéronef à triple corps) ou un compresseur haute pression. Le compresseur n'est en outre pas non plus nécessairement en aval d'une soufflante. Le sous-ensemble selon l'invention s'intègre sans peine dans chacun de cadres techniques, et de préférence, lorsqu'il n'est pas nécessaire d'adjoindre une rangée d'aubes à calage variable en entrée du compression précédant axialement la rangée d'aubes rotoriques la plus en amont du compresseur.

Le sous-ensemble est agencé au niveau amont d'un compresseur haute pression agencé en aval d'un compresseur basse pression, les bras structuraux qui sont alors considérés sont ceux d'un carter de support intermédiaire s'étendant de préférence circonférentiellement entre ces compresseurs basse et haute pression. Dans ce cas, la rangée d'aubes statoriques est alors une rangée de sortie (la plus en aval) du compresseur basse pression tandis que la rangée d'aubes rotoriques est une rangée d'entrée (la plus en amont) du compresseur haute pression.

Dans le cadre du présent document, il convient de distinguer les termes « aube » et « bras » selon la pratique d'un homme du métier. Tel que détaillé dans la section d'art antérieur, un bras permet de transmettre des efforts structurels et d'accueillir des servitudes, par exemple, associées à un réducteur, et ce de façon à impacter le moins possible l'écoulement du flux d'air dans la veine aérodynamique primaire. À l'inverse, une aube poursuit un objectif aérodynamique tel qu'il est bien connu. L'invention repose sur la modification de la géométrie d'une portion aval d'un bras pour jouer un rôle aérodynamique, ce qui n'était pas du tout son objectif initial.

Des modes de réalisation préférés de l'invention sont introduits. Comme mentionné précédemment, l'extension axiale et circonférentielle de la portion aval d'un bras permet de dévier le flux d'air primaire de façon à lui offrir une pré-rotation juste en amont de la rangée d'aubes rotoriques. Cette portion aval présente une direction d'extension en son bord aval de fuite (orienté en aval) incliné d'un angle α par rapport à l'axe moteur. Cette direction d'extension formalise la déviation subie par le flux d'air primaire en sortie de la rangée de bras, et donc la pré-rotation susdite qui est préférentiellement proche de ce même angle α.

Cet angle α est de préférence compris strictement entre 1 et 25°, préférentiellement strictement entre 1 et 15°, plus préférentiellement encore entre 5 et 15°. Il est de préférence orienté dans le même sens que le sens de rotation du rotor du compresseur. En particulier, l'angle α est de préférence dirigé par rapport à l'axe moteur dans un sens de rotation de la rangée d'aubes rotoriques. En d'autres termes, la direction d'extension est de préférence orientée circonférentiellement dans le sens de rotation de la rangée d'aubes rotoriques. En outre, l'angle α est de préférence dirigé par rapport à l'axe moteur en sens opposé d'un angle de calage des aubes rotoriques. En d'autres termes, l'angle α est préférentiellement tel que l'orientation de la direction d'extension et d'un calage des aubes rotoriques sont de sens opposé circonférentiellement (c'est-à-dire, qu'à une même coordonnée radiale, un parcours axial de la direction d'extension s'étend de façon circonférentielle en sens opposé d'un parcours axial des aubes rotoriques). Ces caractéristiques sur l'angle α permettent de mettre en valeur plus efficacement l'effet technique de la diminution de la vitesse du flux d'air primaire perçues par les aubes rotoriques dans leur repère non inertiel relatif.

Selon un mode de réalisation préféré de la présente invention, une ligne cambrure moyenne du bras (et/ou de chacun des bras) présente :
- une tangente au bord amont du bras essentiellement parallèle à l'axe moteur ;
- une tangente au bord aval de fuite du bras inclinée de l'angle α par rapport à l'axe moteur.

Dans le cadre de ce document, comme connu d'un homme du métier, la « ligne de cambrure moyenne » d'un bras (ou, en général, d'une aube) correspond à une ligne du profil du bras (obtenu par projection radiale) à mi-distance entre l'extrados et l'intrados du profil du bras. En particulier, cette ligne relie les bords amont et aval de fuite du bras. Ces définitions sont largement connues d'un homme du métier. La tangente au bord aval de fuite du bras correspond à ladite direction d'extension de la portion aval du bras, alors que celle au bord amont correspond à une direction d'extension amont du bras. En particulier, ce mode de réalisation préféré propose un bras pour amener de façon essentiellement régulière une déviation du flux d'air primaire, à partir d'une trajectoire axiale, dans une trajectoire axiale et circonférentielle, cette dernière présentant donc une pré-rotation d'angle α.

Ce mode de réalisation préféré présente également l'avantage de permettre un maintien, et de préférence une accélération, de la vitesse du flux d'air primaire dans la veine aérodynamique primaire, au niveau du carter de support. Cet effet technique supplémentaire est avantageux car la veine aérodynamique primaire présente généralement, au niveau du carter de support, une courbure (due, par exemple, à un profil en col de cygne) induisant une décélération du flux d'air principal (sur la paroi intérieure de la veine aérodynamique) qui pénalise de façon générale le comportement aérodynamique du compresseur en aval des bras. En proposant un ou plusieurs bras structuraux de portion aval s'étendant progressivement circonférentiellement de cette façon, le sous-ensemble selon l'invention permet d'éviter cet inconvénient typique des carters de support.

Toute la portion du bras qui s'étend de façon à la fois axiale et circonférentielle pour dévier le flux primaire comprend la portion aval, mais est également susceptible de comprendre plus que cette seule portion, ce qui apparaît à l'usage du terme « au moins une portion aval ». Suivant le mode de réalisation préféré susdit, cette portion du bras correspond (par extension en parallèle) à une portion de la ligne de cambrure moyenne. La ligne de cambrure moyenne présente alors de préférence une tangente essentiellement parallèle à l'axe moteur en chacun de ses points en amont de cette portion, et une tangente inclinée d'un angle par rapport à l'axe moteur en chacun de ses points de cette portion, cet angle dépendant du point considéré et étant préférentiellement croissant de 0 à α d'amont en aval sur cette portion. Cette portion s'étend sur 1 à 100%, de préférence sur 10 à 30%, plus préférentiellement encore sur 10 à 20%, de la ligne de cambrure moyenne. En d'autres termes, la portion aval du bras (dans le sens la « au moins une portion aval du bras) s'étend préférentiellement sur 10 à 30%, plus préférentiellement sur 10 à 20%, de la ligne de cambrure moyenne. Le profil du bras n'est donc essentiellement modifié que sur une petite portion aval pour produire l'avantageux effet technique de l'invention.

Cette dernière réalisation n'exclut pas du cadre de l'invention le mode de réalisation particulier où le bras s'étend à la fois axialement et circonférentiellement sur toute sa longueur (ou ligne de cambrure moyenne). Dans un premier cas, ce mode de réalisation particulier est un sous-mode de réalisation du mode de réalisation préféré général précédent, avec ladite portion de la ligne de cambrure moyenne qui s'étend sur presque 100% de la ligne de cambrure moyenne. Dans un deuxième cas distinct du premier, le bras s'étend selon une seule direction présentant l'angle α par rapport à l'axe moteur. Sa ligne de cambrure moyenne présente alors une même tangente en ses bords amont et aval de fuite inclinée de l'angle par rapport à l'axe moteur. Le bras dans ce deuxième cas est ainsi dit « calé » sur l'angle α.

Selon un autre mode de réalisation de l'invention (néanmoins compatible avec les précédents), la rangée de bras comprend des aubes intercalaires fixes s'étendant axialement entre les portions aval des bras. Ces aubes intercalaires ont l'avantage d'assurer et d'amplifier l'effet technique de déviation du flux d'air primaire circonférentiellement et de soulager aérodynamiquement les portions aval des bras. Les aubes intercalaires sont de préférence alternées circonférentiellement avec les portions aval des bras.

L'usage, dans le présent document, du verbe « comprendre », de ses variantes, ainsi que ses conjugaisons, ne peut en aucune façon exclure la présence d'éléments autres que ceux mentionnés. L'usage, dans le présent document, de l'article indéfini « un », « une », ou de l'article défini « le », « la » ou « l' », pour introduire un élément n'exclut pas la présence d'une pluralité de ces éléments. Les termes « premier », « deuxième », « troisième », et ainsi de suite, sont, quant à eux, utilisés dans le cadre de ce document exclusivement pour différencier différents éléments semblables, et ce sans impliquer d'ordre entre ces éléments.

### Brève description des figures

D'autres caractéristiques et avantages de la présente invention apparaîtront à la lecture de la description suivante pour la compréhension de laquelle il sera fait référence aux figures annexées :
- la figure 1 illustre une vue schématique d'une coupe de turbomachine d'aéronef selon un mode de réalisation préféré de l'invention ;
- la figure 2A illustre un agrandissement d'un sous-ensemble de la figure 1 ;
- la figure 2B illustre une autre vue (du dessus) des éléments illustrés en figure 2A ;
- les figures 3A et 3B représentent de façon vectorielle l'absence (figure 3A) et la présence (figure 3B) d'un effet technique de l'invention dans un repère relatif d'une aube rotorique ;
- la figure 4 illustre une vue schématique d'un des bras structuraux d'un carter de support selon un mode de réalisation préféré de l'invention.

Les dessins des figures ne sont pas à l'échelle. Généralement, des éléments semblables sont dénotés par des références semblables dans les figures. Dans le cadre du présent document, les éléments identiques ou analogues peuvent porter les mêmes références. En outre, la présence de numéros ou lettres de référence aux dessins ne peut être considérée comme limitative, y compris lorsque ces numéros ou lettres sont indiqués dans les revendications.

### Description détaillée de modes de réalisation particuliers de l'invention

Cette partie du texte décrit en détails des modes de réalisation préférés de l'invention. Des références à des figures sont utilisées mais l'invention n'est pas limitée par celles-ci. Les dessins et/ou figures décrits ci-dessous ne sont que schématiques et ne sont pas limitants.

Des références sont représentées sur certaines de ces figures comme repères géométriques abstraits essentiellement afin de quantifier et/ou visualiser des propriétés de modes de réalisation de l'invention. Dans le cadre du présent document, il est fait référence aux directions « axiale », « circonférentielle » et « radiale » correspondant de respectivement en des directions parallèles à l'axe moteur, essentiellement circulaire autour de l'axe moteur, et perpendiculaire à l'axe moteur. Des repères sur les figures illustrent ces directions (munies d'un sens) notées respectivement X, R et C. Par abus de notation pour des éléments analogues, comme le vecteur X correspondant a le même sens et la même direction que l'axe moteur, ce dernier sera aussi désigné par la référence X. Les termes « axialement », « radialement » et « circonférentiellement » sont dérivés respectivement des termes « axial », « radial » et « circonférentiel », avec une signification préférée analogue. Les termes « circonférentielle » et « radiale » font en outre préférentiellement référence à un système de coordonnées polaires connu d'un homme du métier dans chaque plan perpendiculaire à l'axe moteur. Les termes « intérieurement » et « vers l'intérieur » correspondent naturellement à un sens vers l'axe moteur X selon une direction radiale, et les termes « extérieurement » et « vers l'extérieur » au sens opposé selon cette direction. Le terme « en / d'entrée » (et respectivement « en / de sortie »), pour parler de la position d'un élément dans une turbomachine d'aéronef ou dans un compresseur, font préférentiellement référence à un premier (respectivement, dernier) tel élément essentiellement en amont (respectivement, essentiellement en aval) de la turbomachine d'aéronef ou du compresseur.

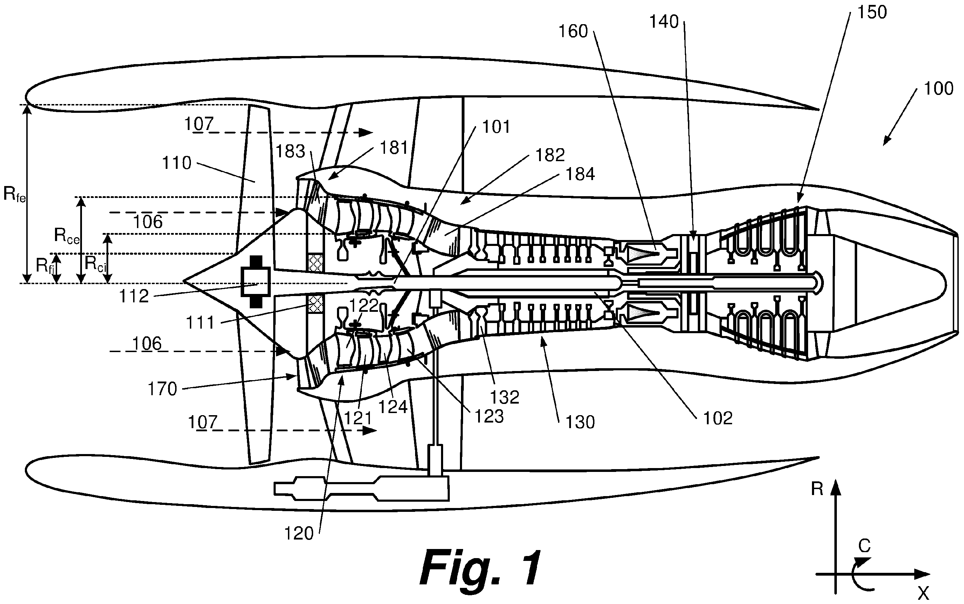

La figure 1 illustre une turbomachine d'aéronef 100 comprenant le sous-ensemble selon l'invention. Il s'agit précisément d'une turbomachine axiale à double flux comprenant successivement le long de l'axe moteur X, une soufflante 110, un compresseur basse pression 120, un compresseur haute pression 130, une chambre de combustion 160, une turbine haute pression 140 et une turbine basse pression 150. Ces éléments sont connus d'un homme du métier. En fonctionnement, la puissance mécanique des turbines basse 150 et haute 140 pression est transmise respectivement via des arbres 101 et 102 aux compresseurs basse 120 et haute 130 pression, ainsi qu'à la soufflante 110 par l'intermédiaire d'un réducteur 111 interposé au niveau de l'arbre 101. La soufflante 110 permet de générer un flux d'air primaire 106 traversant la turbomachine d'aéronef 100 dans une veine aérodynamique primaire et un flux d'air secondaire 107 extérieurement autour des compresseurs 120, 130 et des turbines 140, 150.

Chacun des compresseurs 120, 130 et chacune des turbines 140, 150, comprend un ou plusieurs étages dont chacun comprend une rangée annulaire d'aubes (ou « aubage ») statoriques fixes et une rangée annulaire d'aubes rotoriques mobiles pour être mises en rotation autour de l'axe moteur X. Le compresseur basse pression 120 est en particulier muni d'une rangée d'entrée d'aubes rotoriques 122 suivie directement en aval d'une rangée d'aubes statoriques 121. Il comprend aussi une rangée de sortie d'aubes statoriques 123 précédées directement en amont d'une rangée d'aubes rotoriques 124. La représentation du compresseur basse pression 120 en figure 1 n'est pas limitative du nombre de telles rangées d'aubes. Une rangée d'aubes statoriques 170 est agencée en amont du compresseur basse pression 120 et en aval de la soufflante 110 pour redresser de façon axiale le flux d'air primaire 106 préalablement à son intégration d'entrée dans le compresseur basse pression 120. Le compresseur haute pression 130 est quant à lui muni d'une rangée d'entrée d'aubes rotoriques 132.

Afin d'accroître le rendement de la turbomachine d'aéronef, il est connu de prévoir des rotors de compresseurs 120, 130 qui tournent à vitesse élevée et une soufflante 110 de grand diamètre (par exemple, dans le cas d'un turboréacteur du type UHBR (*Ultra High By Pass Ratio*, en anglais)). Un système de calage variable 112 est de préférence adjoint à la soufflante 110 tandis que le réducteur 111 permet de réduire la vitesse de rotation de la soufflante 110 par rapport à celle de l'arbre 101 et du compresseur basse pression 120 pour tenir compte de ses contraintes et limites mécaniques. Le réducteur 111 est toutefois une pièce mécanique lourde qui doit être supportée structurellement tout en recevant une puissance et une lubrification suffisante. Pour ce faire, la turbomachine d'aéronef 100 est munie d'un carter de support d'entrée 181 qui s'étend au moins en partie circonférentiellement autour du réducteur 111, agencé à la fois en aval de la soufflante 110 et de la rangée d'aubes statoriques 170, et en amont du compresseur basse pression 120. Le carter de support d'entrée 181 est muni d'une manche annulaire délimitant la veine aérodynamique primaire et des bras 183 structuraux qui s'étendent radialement vers l'intérieur en traversant la veine aérodynamique primaire. Les bras 183 contribuent à soutenir la turbomachine d'aéronef 100 et à permettre le passage d'efforts et de servitudes (des câbles électriques et/ou des circuits de lubrification, par exemple), en particulier vers le réducteur 111.

La présence du réducteur 111 induit un certain encombrement en amont du compresseur basse pression 120. En particulier, un rayon intérieur minimal Rr (visible en figure 2A) sous la veine aérodynamique primaire est nécessaire. Dès lors, un rapport entre le rayon intérieur Rci et le rayon extérieur Rce en amont du compresseur basse pression 120 (par exemple, au niveau de la rangée d'aubes rotoriques 122) s'en trouve accru et compris entre 60 et 90%. A titre de comparaison, le rapport entre le rayon intérieur Rfi et le rayon extérieur Rfe de la soufflante 110 est compris entre 20 et 40%. Ces rayons Rr, Rci, Rce, Rfi et Rfe sont mesurés de façon radiale à partir de l'axe moteur X. Il est donc associé à ces contraintes un profil en col de cygne du manche annulaire du carter de support d'entrée 181, et donc d'une portion annulaire de la veine aérodynamique primaire dans laquelle sont agencées les rangées d'aubes statoriques 170, de bras 183 et d'aubes rotoriques 122.

De façon classique, la turbomachine d'aéronef 100 comprend un carter de support intermédiaire 182 qui s'étend circonférentiellement entre les compresseurs basse 120 et haute 130 pression. Ce carter de support intermédiaire 182 comprend une manche annulaire présentant de préférence un profil en col de cygne et délimitant la veine aérodynamique primaire entre les compresseurs basse 120 et haute 130 pression. Il est aussi muni de bras 184 structuraux s'étendant radialement, traversent la veine aérodynamique primaire et contribuant, tout comme les bras 183 du carter de support d'entrée 181, à soutenir la turbomachine d'aéronef 100 et à permettre le passage d'efforts et de servitudes diverses.

Les bras 183 et 184 s'étendent usuellement axialement dans le but d'impacter le moins possible d'écoulement du flux d'air primaire 106 dans la veine aérodynamique primaire. L'invention propose à l'inverse des bras 183, de profil visible en figures 2B et 4, présentant chacun une portion aval 183' comprenant un bord aval de fuite 183F, s'étendant à la fois de façon axiale et circonférentielle, et ce de façon à dévier circonférentiellement le flux d'air primaire 106 d'une trajectoire axiale, juste en amont de la rangée d'aubes rotoriques 122, pour lui donner une pré-rotation d'un angle α de préférence strictement compris entre 1 et 25°, et plus préférentiellement compris entre 5° et 15°, dans le sens de rotation des aubes rotoriques 122. Cette pré-rotation permet avantageusement de diminuer la vitesse du flux d'air primaire 106 dans le repère relatif des aubes rotoriques 122 sans devoir adjoindre au compresseur basse pression 120 une rangée d'aubes statoriques (IGV) additionnelle en amont de la rangée d'aubes rotoriques 122. La turbomachine d'aéronef 100 comprend ainsi un sous-ensemble selon la présente invention comprenant, successivement et directement le long de l'axe moteur X, la rangée d'aubes statoriques 170, la rangée de bras 183 et la rangée d'aubes rotoriques 122.

Il est maintenant désigné par portion amont d'un bras 183 une portion du bras 183 s'étendant entre un bord amont 183A du bras 183, en extrémité amont du bras 183, et une extrémité amont de la portion aval 183' du bras 183 déviante pour le flux d'air primaire 106. Tel qu'illustré en figures 2B et 4, une ligne de cambrure moyenne 183L de chaque bras 183 s'étend essentiellement axialement sur la portion amont du bras 183 et présente une courbure sur toute la portion aval 183', jusqu'au bord aval de fuite 183F du bras 183, en extrémité aval du bras 183. En particulier, cette ligne de cambrure moyenne 183L présente une tangente qui est essentiellement parallèle à l'axe moteur X en chacun des points correspondant axialement à la portion amont du bras 183. Elle présente une tangente présentant un angle avec l'axe moteur X en chacun des points correspondant axialement à la portion aval 183' du bras 183, ceux-ci s'étendant de préférence sur 10 à 20% de la ligne de cambrure. Cet angle correspond à l'angle α au bord aval de fuite 183F du bras 183, la tangente en ce point définissant une direction d'extension de la portion aval 183' au bord aval de fuite 183F.

L'impact de l'effet technique est illustré en figure 3A et 3B dans un diagramme vectoriel de vitesses (instantanée) considéré dans le repère relatif d'une aube rotorique 122 (qui se distingue donc du schéma en figure 2B). Il est considéré que les aubes rotoriques 122 sont en rotation autour de l'axe moteur X à une vitesse de rotation U et que le flux d'air primaire 106 en entrée de manche du carter de support d'entrée 181 est purement axial de vitesse Vx. Sans la déviation susmentionnée du flux d'air primaire 106 par les bras 183, les aubes rotoriques 122 voient, en chaque point, une vitesse relative absolue correspondant à W = (Vx² + U²)^{1/2}. Grâce à la présente invention une portion aval 183' des bras 183, correspondant à une zone d'accélération sur le profil des bras 183, dévient le flux d'air primaire 106 d'un angle α dans le sens de rotation des aubes rotoriques 122, de sorte que le flux d'air primaire 106 en entrée du compresseur basse pression 120 de vitesse V n'est plus axial et présente une composante perpendiculaire à l'axe moteur X. Chaque point des aubes rotoriques 122, dans leur propre repère, voit une vitesse relative absolue correspondant à W = (Vx² + (U-U')²)^{1/2}, où U' = Vx Tan(α) est la contribution due à la pré-rotation des bras 183.

Bien que ces équations soient valables en tout point des aubes rotoriques 122, les valeurs des vitesses impliquées varient radialement. En particulier, la vitesse de rotation en tête (extérieure) d'une aube rotorique 122 est plus grande que la vitesse de rotation en pied (intérieur) de cette aube rotorique 122. Sans la pré-rotation du flux d'air principal 106 obtenue grâce au sous-ensemble selon l'invention, les vitesses relatives perçues en tête et en pied d'aubes rotoriques atteignent respectivement des valeurs qui pénalisent le rendement et la stabilité du compresseur basse pression 120. Avec cette pré-rotation, donc dans ce contexte de l'invention, ces vitesses sont respectivement limitées, ce qui permet avantageusement de ne pas excéder des vitesses critiques pour la stabilité du compresseur basse pression 120, et des éléments de la turbomachine d'aéronef 100 en général.

En résumé, l'invention concerne une sous-ensemble de turbomachine d'aéronef 100 comprenant des rangées successives d'aubes statoriques 170, 123, de bras 183, 184 structuraux d'un carter 181, 182 de support, et d'aubes rotoriques 122, 132 d'un compresseur 120, 130, les portions avals 183' des bras 183, 184 s'étendant de façon axiale et circonférentielle de façon à dévier circonférentiellement un flux d'air d'une trajectoire axiale, en amont du compresseur 120, 130.

La présente invention a été décrite en relation avec des modes de réalisations spécifiques, qui ont une valeur purement illustrative et ne doivent pas être considérés comme limitatifs. D'une manière générale, il apparaîtra évident pour un homme du métier que la présente invention n'est aucunement limitée aux exemples illustrés et/ou décrits ci-dessus. En particulier, bien que l'invention ait été décrite de façon détaillée au niveau amont du compresseur basse pression 120, pour les bras 183 du carter de support d'entrée 181 de la turbomachine d'aéronef 100, elle s'applique de façon complètement semblable au niveau amont du compresseur haute pression 130, pour les bras 184 du carter de support intermédiaire 182 de cette turbomachine d'aéronef 100, sans se départir aucunement du cadre de l'invention. La sous-ensemble selon l'invention comprend, dans ce cas, de façon successive et directement le long de l'axe moteur X, les rangées d'aubes statoriques 123, de bras 184 et d'aubes rotoriques 132, le flux d'air 106 subissant alors une pré-rotation circonférentielle par les bras 184, juste en amont de la rangée d'aubes rotoriques 132. Ces modes de réalisation peuvent être implémentés seuls ou en combinaison. De façon générale, l'invention est très bien adaptée à un niveau amont d'une architecture de compresseur 120, 130 d'une turbomachine d'aéronef 100, de préférence munie d'un réducteur 111 couplé à une soufflante 110, agencé en aval d'un carter de support 181, 182 présentant une veine aérodynamique primaire préférentiellement en col de cygne.

## Revendications

1. Turbomachine d'aéronef (100) comprenant
- une soufflante (110) et un réducteur (111) pour entraîner la soufflante (110) en rotation autour de l'axe moteur (X)
- un sous-ensemble de turbomachine d'aéronef (100) s'étendant le long d'un axe moteur (X) dirigé d'amont vers aval, entre une extrémité amont d'entrée d'air et une extrémité aval de sortie d'air,
le sous-ensemble comprenant :
• une rangée d'aubes statoriques (170), la rangée d'aubes statoriques (170) est une rangée d'entrée de la turbomachine d'aéronef (100),
• une rangée de bras (183) structuraux d'un carter (181) de support d'entrée de la turbomachine d'aéronef (100), et s'étendent au moins partiellement circonférentiellement autour du réducteur (111) et étant apte au passage d'effort vers le réducteur (111),
• une rangée d'aubes rotoriques (122) d'entrée d'un compresseur basse pression (120), de la turbomachine d'aéronef (100),
le sous-ensemble étant tel que :
• ces rangées sont agencées, dans l'ordre susdit, de façon successive et directe, le long de l'axe moteur (X) ;
• au moins une portion aval (183') d'au moins un des bras (183) s'étend à la fois axialement et circonférentiellement et présente une direction d'extension en un bord aval de fuite (183F) du bras (183) inclinée d'un angle (α) non nul par rapport à l'axe moteur (X) de façon à dévier circonférentiellement un flux d'air d'une trajectoire axiale.

2. Turbomachine selon la revendication précédente, **caractérisée en ce qu'**une ligne de cambrure moyenne (183L) du bras (183) présente :
• une tangente en un bord amont (183A) du bras (183) essentiellement parallèle à l'axe moteur (X) ;
• une tangente au bord aval de fuite (183F) du bras (183) inclinée de l'angle (α) par rapport à l'axe moteur (X).

3. Turbomachine selon la revendication 2, **caractérisée en ce que** la portion aval (183') s'étend uniquement sur 10 à 30% de la ligne de cambrure moyenne (183L).

4. Turbomachine selon la revendication 2, **caractérisée en ce que** le bras (183) s'étend à la fois axialement et circonférentiellement sur toute sa ligne de cambrure moyenne (183L).

5. Turbomachine selon la revendication 1, **caractérisée en ce que** le bras (183) s'étend selon une seule direction présentant l'angle (α) par rapport à l'axe moteur (X).

6. Turbomachine selon l'une quelconque des revendications précédentes, **caractérisée en ce que** l'angle (α) est strictement compris entre 1 et 25°.

7. Turbomachine selon l'une quelconque des revendications précédentes, **caractérisée en ce que** l'angle (α) est dirigé par rapport à l'axe moteur (X) dans un sens de rotation de la rangée d'aubes rotoriques (122).

8. Turbomachine selon l'une quelconque des revendications précédentes, **caractérisée en ce que** l'angle (α) est dirigé par rapport à l'axe moteur (X) en sens opposé d'un angle de calage des aubes rotoriques (122).

9. Turbomachine selon l'une quelconque des revendications précédentes, **caractérisée en ce qu'**au moins une portion aval de chacun des bras s'étend à la fois axialement et circonférentiellement et présente une direction d'extension en un bord aval de fuite inclinée d'un angle non nul par rapport à l'axe moteur de façon à dévier circonférentiellement un flux d'air d'une trajectoire axiale.

10. Turbomachine selon la revendication précédente, **caractérisée en ce que** la rangée de bras (183) comprend des aubes intercalaires fixes s'étendant axialement entre les portions avals (183') des bras (183).

11. Turbomachine selon l'une quelconque des revendications précédentes, **caractérisée en ce qu'**elle comprend en outre une portion annulaire de veine aérodynamique primaire de turbomachine d'aéronef (100), pour accueillir un flux d'air primaire (106), présentant un profil en col de cygne, chacune des rangées susdites étant agencées dans cette portion annulaire.

12. Turbomachine d'aéronef (100) selon l'une quelconque des revendications précédentes, **caractérisée en ce qu'**un rapport entre un rayon intérieure (Rci) et un rayon extérieur (Rce) de la rangée d'aubes rotoriques (122) est compris entre 60 et 90%, les rayons intérieure (Rci) et extérieur (Rce) étant mesurés radialement à partir de l'axe moteur (X).

## Patentansprüche

1. Flugzeugturbomaschine (100), umfassend
- ein Gebläse (110) und ein Untersetzungsgetriebe (111) zum Drehantrieb des Gebläses (110) um die Motorachse (X)
- eine Unterbaugruppe eines Flugzeugturbomaschine (100), die sich entlang einer von vorgelagert nach nachgelagert gerichteten Motorachse (X) zwischen einem vorgelagerten Lufteinlassende und einem nachgelagerten Luftauslassende erstreckt,
wobei die Unterbaugruppe umfasst:
- eine Reihe von Statorschaufeln (170), wobei die Reihe von Statorschaufeln (170) eine Einlassreihe der Flugzeugturbomaschine (100) ist,
- eine Reihe von strukturellen Armen (183) eines Gehäuses (181) zum Stützen des Einlasses de Flugzeugturbomaschine (100), und die sich mindestens teilweise in Umfangsrichtung um das Untersetzungsgetriebe (111) erstrecken und zur Kraftübertragung an das Untersetzungsgetriebe (111) geeignet sind,
- eine Reihe von Rotorschaufeln (122) am Einlass eines Niederdruckverdichters (120), der Flugzeugturbomaschine (100),
wobei die Unterbaugruppe derart ist, dass:
- diese Reihen in der vorgenannten Reihenfolge aufeinanderfolgend und direkt entlang der Motorachse (X) angeordnet sind;
- mindestens ein nachgelagerter Abschnitt (183') mindestens eines der Arme (183) sich sowohl axial als auch in Umfangsrichtung erstreckt und eine Erstreckungsrichtung an einem nachgelagerten Fluchtrand (183F) des Arms (183) aufweist, der um einen Winkel (α) ungleich Null in Bezug auf die Motorachse (X) geneigt ist, um einen Luftstrom in Umfangsrichtung von einer Axialtrajektorie abzulenken.

2. Turbomaschine nach dem vorstehenden Anspruch, **dadurch gekennzeichnet, dass** eine mittlere Krümmungslinie (183L) des Arms (183) aufweist:
- eine Tangente an einem vorgelagerten Rand (183A) des Arms (183), die im Wesentlichen parallel zur Motorachse (X) verläuft;
- eine Tangente am nachgelagerten Fluchtrand (183F) des Arms (183), die um den Winkel (α) in Bezug auf die Motor-Achse (X) geneigt ist.

3. Turbomaschine nach Anspruch 2, **dadurch gekennzeichnet, dass** sich der nachgelagerte Abschnitt (183') nur über 10 bis 30 % der mittleren Krümmungslinie (183L) erstreckt.

4. Turbomaschine nach Anspruch 2, **dadurch gekennzeichnet, dass** sich der Arm (183) sowohl axial als auch in Umfangsrichtung über seine gesamte mittlere Krümmungslinie (183L) erstreckt.

5. Turbomaschine nach Anspruch 1, **dadurch gekennzeichnet, dass** sich der Arm (183) in einer einzigen Richtung erstreckt, die den Winkel (α) in Bezug auf die Motorachse (X) aufweist.

6. Turbomaschine nach einem der vorstehenden Ansprüche, **dadurch gekennzeichnet, dass** der Winkel (α) streng genommen zwischen 1 und 25° liegt.

7. Turbomaschine nach einem der vorstehenden Ansprüche, **dadurch gekennzeichnet, dass** der Winkel (α) in Bezug auf die Motorachse (X) in einer Drehrichtung der Rotorschaufelreihe (122) gerichtet ist.

8. Turbomaschine nach einem der vorstehenden Ansprüche, **dadurch gekennzeichnet, dass** der Winkel (α) in Bezug auf die Motorachse (X) entgegengesetzt zu einem Verkeilungswinkel der Rotorschaufeln (122) gerichtet ist.

9. Turbomaschine nach einem der vorstehenden Ansprüche, **dadurch gekennzeichnet, dass** mindestens ein nachgelagerter Abschnitt jedes der Arme sich sowohl axial als auch in Umfangsrichtung erstreckt und eine Erstreckungsrichtung an einem nachgelagerten Fluchtrand aufweist, der um einen Winkel ungleich Null in Bezug auf die Motorachse geneigt ist, um einen Luftstrom in Umfangsrichtung von einer Axialtrajektorie abzulenken.

10. Turbomaschine nach dem vorstehenden Anspruch, **dadurch gekennzeichnet, dass** die Reihe von Armen (183) feste Zwischenschaufeln umfasst, die sich axial zwischen den nachgelagerten Abschnitten (183') der Arme (183) erstrecken.

11. Turbomaschine nach einem der vorstehenden Ansprüche, **dadurch gekennzeichnet, dass** es weiter einen ringförmigen Abschnitt des aerodynamischen Primärstroms einer Flugzeugturbomaschine (100) umfasst, um einen Primärluftstrom (106) aufzunehmen, der ein Schwanenhalsprofil aufweist, wobei jede der vorgenannten Reihen in diesem ringförmigen Abschnitt angeordnet ist.

12. Flugzeugturbomaschine (100) nach einem der vorstehenden Ansprüche, **dadurch gekennzeichnet, dass** ein Verhältnis zwischen einem Innenradius (Rci) und einem Außenradius (Rce) der Rotorschaufelreihe (122) zwischen 60 und 90% liegt, wobei der Innenradius (Rci) und der Außenradius (Rce) radial von der Motorachse (X) aus gemessen werden.

## Claims

1. Aircraft turbine engine (100) comprising
- a fan (110) and a reducer (111) to rotate the fan (110) about the drive shaft (X)
- a subassembly for an aircraft turbine engine (100) extending along a drive shaft (X) directed from upstream to downstream, between an upstream air inlet end and a downstream air outlet end,
the subassembly comprising:
- a row of stator vanes (170), the row of stator vanes (170) is an input row of the aircraft turbine engine (100),
- a row of structural arms (183) of an input support casing (181) of the aircraft turbine engine (100), and extend at least partially circumferentially around the reducer (111) and being capable for the passage of force to the reducer (111),
- a row of input rotor vanes (122) of a low-pressure compressor (120), of the aircraft turbine engine (100),
the subassembly being such that:
- these rows are arranged, in the abovesaid order, successively and directly, along the drive shaft (X);
- at least one downstream portion (183') of at least one of the arms (183) extends both axially and circumferentially and has an extension direction into a downstream trailing edge (183F) of the arm (183) inclined by an angle (α) which is non-zero with respect to the drive shaft (X), so as to circumferentially deviate an airflow of an axial trajectory.

2. Turbine engine according to the preceding claim, **characterised in that** an average camber line (183L) of the arm (183) has:
- a tangent in an upstream edge (183A) of the arm (183) mainly parallel to the drive shaft (X);
- a tangent at the downstream trailing edge (183F) of the arm (183) inclined by the angle (α) with respect to the drive shaft (X).

3. Turbine engine according to claim 2, **characterised in that** the downstream portion (183') extends only over 10 to 30% of the average camber line (183L).

4. Turbine engine according to claim 2, **characterised in that** the arm (183) extends both axially and circumferentially over its entire average camber line (183L).

5. Turbine engine according to claim 1, **characterised in that** the arm (183) extends along one single direction having the angle (α) with respect to the drive shaft (X).

6. Turbine engine according to any one of the preceding claims, **characterised in that** the angle (α) is strictly between 1 and 25°.

7. Turbine engine according to any one of the preceding claims, **characterised in that** the angle (α) is directed with respect to the drive shaft (X) in a direction of rotation of the row of rotor vanes (122).

8. Turbine engine according to any one of the preceding claims, **characterised in that** the angle (α) is directed with respect to the drive shaft (X) in the opposite direction of a pitch angle of the rotor vanes (122).

9. Turbine engine according to any one of the preceding claims, **characterised in that** at least one downstream portion of each of the arms extends both axially and circumferentially and has an extension direction into a downstream trailing edge inclined by an angle which is non-zero with respect to the drive shaft, so as to circumferentially deviate an airflow of an axial trajectory.

10. Turbine engine according to the preceding claim, **characterised in that** the row of arms (183) comprises fixed interlayer vanes extending axially between the downstream portions (183') of the arms (183).

11. Turbine engine according to any one of the preceding claims, **characterised in that** it further comprises an aircraft turbine engine (100) primary aerodynamic duct annular portion, to receive a primary airflow (106), having a gooseneck profile, each of the abovesaid rows being arranged in this annular portion.

12. Aircraft turbine engine (100) according to any one of the preceding claims, **characterised in that** a ratio between an inner radius (Rci) and an outer radius (Rce) of the row of rotor vanes (122) is between 60 and 90%, the inner (Rci) and outer (Rce) radii being measured radially from the drive shaft (X).
